# EUROPÄISCHE PATENTSCHRIFT

(11) **EP 2 042 410 B1**
(45) Veröffentlichungstag und Bekanntmachung des Hinweises auf die Patenterteilung: **09.03.2011**
(21) Anmeldenummer: 08163056.8
(22) Anmeldetag: 27.08.2008
(51) Int. Cl.: B62D 37/04, B62D 49/08

(54) **Landwirtschaftliches Fahrzeug**
Agricultural vehicle
Véhicule agricole

(30) Priorität: 26.09.2007 DE 102007045912
(43) Veröffentlichungstag der Anmeldung: 01.04.2009
(73) Patentinhaber: Deere & Company, Moline, IL 61265-8098 (US)
(72) Erfinder: Bauer Dr.-Ing., Wolfgang, 67098, Bad Dürkheim (DE); Smith, Paul R., 68623, Lampertheim (DE)
(74) Vertreter: Holst, Sönke

(56) Entgegenhaltungen:
- EP-A- 1 564 116
- DE-A1- 3 223 990
- DE-A1-102005 040 954
- DE-A1-102007 003 432

## Beschreibung

Die Erfindung betrifft ein landwirtschaftliches Fahrzeug, insbesondere Schlepper, mit einem Fahrzeugrumpf und einem über eine Lenkeranordnung am vorderen Teil des Fahrzeugrumpfs befestigten Frontgewicht, wobei das Frontgewicht über die Lenkeranordnung aus einer fahrzeugnahen Position in eine fahrzeugferne Position bewegbar ist.

Es ist bekannt, dass landwirtschaftliche Schlepper, bei Arbeiten mit schweren Heck-Anbaugeräten, wie z.B. mit einem Pflug, zum Ausgleich mit einer Zusatzmasse bzw. Zusatzgewicht oder Frontgewicht am vorderen Ende des Schleppers bestückt werden. Eine derartige Ballastierung mit einem Frontgewicht kann mit einem einteiligen massiven Gewicht (z.B. 900 kg), oder auch durch mehrere kleinere Einzelgewichte (z.B. ä 50 kg) erfolgen. Üblicherweise sind die Frontgewichte an einem vorgegebenen Platz am vorderen Teil des Fahrzeugrumpfs angeordnet und fest installiert. Es ist oftmals mit erheblichem Aufwand verbunden und nicht ohne aufwändige Gerätschaften (Gabelstapler, Kran, Hubvorrichtung etc.) realisierbar, die Frontgewichte zu montieren bzw. zu demontieren, so dass die Frontgewichte nur wenige bzw. aufwändige Möglichkeiten bieten, die durch eine Ballastierung auf die Vorderachse aufgebrachte Zusatzlast zu variieren bzw. den sich ändernden Gegebenheiten bzw. Arbeitsbedingungen optimal anzupassen. Dies führt in der Praxis oftmals dazu, dass meist mit dem gleichen Frontgewicht bzw. mit der gleichen Zusatzmasse gearbeitet wird und dadurch der Schlepper nicht optimal ballastiert unterwegs ist. Dies kann ferner weitere Nachteile mit sich führen: Ein grundsätzlich höherer Kraftstoffverbrauch sowie ein geringere Zuladung bei hochballastigen Zusatzgewichten. Eine größere Fahrzeuglänge und eine damit verbundene geringere Wendigkeit bei Zusatzgewichten die am vorderen Teil des Fahrzeugrumpfs angeordnet sind. Ein relativ hoher Schwerpunkt des Fahrzeugs, da das Zusatzgewicht in der Regel vor dem Fahrzeugrumpf oberhalb der Fahrzeugachse angeordnet ist. Ein damit verbundenes hohes Gefahrenpotential für Unfallgegner bei Straßenfahrt, insbesondere für Pkw's, da die Zusatzmasse in der Regel relativ hoch im Vergleich zu einem Pkw angebracht ist, so dass diese entweder überrollt oder in ungeschützten Bereichen (Fenster, bzw. Dach) durch das Zusatzgewicht gerammt werden.

Im Stand der Technik sind Lösungen bekannt, mit denen versucht wird diese Probleme zu bekämpfen. So ist es beispielsweise bekannt, eine Fronthydraulik, insbesondere Fronthitch, einzusetzen, mit der ein Zusatzgewicht bzw. ein Frontgewicht zur Ballastierung einfach und bequem im Bedarfsfall aufgenommen werden kann. Die Verwendung einer derartigen Fronthydraulik ist jedoch teuer und löst die oben genannten Probleme nur teilweise.

Es ist ferner bekannt, eine Ballastierung durch ein Zusatzgewicht bzw. Frontgewicht dahingehend den geforderten und vorherrschenden Arbeitsbedingungen anzupassen, dass die Anordnung des Gewichts am Fahrzeug variabel ist und insbesondere eine Verschiebung des Gewichts in Längsrichtung des Fahrzeugs ermöglicht wird.

Eine derartige verstellbare Vorrichtung an einem landwirtschaftlichen Schlepper offenbart die US4322094A1. Hier wird über eine auf der Unterseite des Fahrzeugrumpfes angeordnete längsverschiebbar gelagerte Platte ein mit der Platte verbundenes Frontgewicht hydraulisch verschoben. Diese Vorrichtung weist einen hohen konstruktiven Aufwand auf und löst die oben genannten Probleme ebenfalls nur teilweise.

So offenbart die gattungsbildende DE3223990A1 einen landwirtschaftlichen Schlepper, der seitlich des vorderen Fahrzeugrumpfes ein hydraulisch betriebenes Parallelogrammgestänge aufweist, mit dem ein vor dem Fahrzeugrumpf geführtes Zusatzgewicht vorwiegend in Längsrichtung von einer oberen fahrzeugnahen Position in eine untere fahrzeugferne Position bewegt werden kann. Nachteilig wirkt sich hier aus, dass der Schwerpunkt des Zusatzgewichts in seiner fahrzeugnahen Position aufgrund der Ausgestaltung des Gestänges relativ hoch liegt. Ferner nimmt die Anordnung unvorteilhaft viel Raum seitlich des Fahrzeugs in Anspruch.

Die der Erfindung zugrunde liegende Aufgabe wird darin gesehen, eine landwirtschaftliche Maschine der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine landwirtschaftliche Maschine der eingangs genannten Art derart ausgebildet, dass die Lenkeranordnung seitlich des Frontgewichts jeweils zwei angeordnete Lenker aufweist, die einenends mittelbar oder unmittelbar am Fahrzeugrumpf und anderenends mittelbar oder unmittelbar an den Seiten des Frontgewichts derart angeordnet sind, dass das Frontgewicht in der fahrzeugnahen Position eine tiefere Schwerpunktlage einnimmt als in der fahrzeugfernen Position. Ein erfindungsgemäßes landwirtschaftliches Fahrzeug ermöglicht, durch Längsverlagerung des Frontgewichts, die auf die Vorderräder des Fahrzeugs wirkende Zusatzmasse einzustellen und optimal den vorherrschenden Betriebsbedingungen anzupassen. Dadurch kann zur Ballastierung eine insgesamt geringere Gesamtmasse eingesetzt werden. Dadurch, dass das Frontgewicht beweglich ist, kann es auch auf einfache Weise in eine Aufbockstellung gebracht werden. Das erleichtert sowohl das Abstellen bzw. Abmontieren als auch das Aufsetzen bzw. Anmontieren des Frontgewichts. Damit sind beispielsweise bei Transportfahrten ohne großen Aufwand höhere Zuladungen möglich und es wird ein insgesamt geringerer Kraftstoffverbrauch erzielt. Die gesamten Bauteile, sowohl Lenker als auch Lagerbolzen sind vorzugsweise massiv ausgebildet, so dass trotz Vorhandensein der Lenkeranordnung Zugkräfte, beispielsweise bei vorn angehängten Anhängern, übertragen werden können. Eine entsprechende Anhängerkupplung kann dann beispielsweise direkt an das Frontgewicht montiert sein, wobei diese höhenverstellbar ausgebildet sein kann, um sowohl in der fahrzeugnahen als auch in der fahrzeugfernen Position des Frontgewichts eine für das Anhängen des Anhängers erforderliche Anhängehöhe gewährleisten zu können. In der fahrzeugnahen Position, ist (unabhängig von der konstruktiven Ausgestaltung der Anhängerkupplung) aufgrund der niedrigen Position des Frontgewichts eine tiefe Anhängemöglichkeit realisierbar, beispielsweise für Pkw-Anhänger. Durch die niedrige Schwerpunktlage des Frontgewichts in der fahrzeugnahen Position wird zudem ein Personen- und Fahrzeugschutz im Straßenverkehr erhöht, da Hindernisse bei Kollisionen, z.B. bei einem Unfall mit einem Pkw, in einer tieferen Position gerammt werden, so dass auch ein Überrollen vermieden werden kann. Die fahrzeugnahe Position des Frontgewichts bietet eine maximale Wendigkeit des Fahrzeugs, da das vorstehende Frontgewicht nicht so weit herausragt. Durch die fahrzeugnahe Position mit tiefer Schwerpunktlage des Frontgewichts wird auch die Fahrsicherheit bei Kurvenlage oder Hanglage des Fahrzeugs erhöht.

Vorzugsweise sind die Lenker parallel zueinander geführt und versetzt zueinander angeordnet. Die Schwenkpunkte bzw. Lagerpunkte der Lenkeranordnung bilden somit ein Parallelogramm ab. Die parallele Anordnung der Lenker hat den Vorteil, dass das Frontgewicht stets in seiner gleichen Lage gegenüber der Bodenoberfläche bewegt wird. Vorzugsweise ist der in der fahrzeugfernen Position oben liegende Lenker in Fahrzeugrichtung nach vorn versetzt angeordnet, so dass ein freies Verschwenken aus einer in Bezug auf das Fahrzeug möglichst tiefen hinteren Position nach vorn ermöglicht wird. Es ist jedoch auch denkbar und praktikabel, dass die Lenker nicht parallel angeordnet sind, so dass beispielsweise auch eine trapezförmige Lenkeranordnung umsetzbar ist.

Die Lenkeranordnung ist vorzugsweise derart ausgebildet, dass sie parallel zu einer in Fahrzeuglängsrichtung vertikal ausgerichteten Ebene schwenkbar bzw. bewegbar ist. Dadurch wird das Frontgewicht durch die beidseitig angeordneten Lenker von einer unteren hinteren Position in eine obere vordere Position im wesentlichen entlang der Fahrzeuglängsachse bewegt.

Vorzugsweise umfasst die Lenkeranordnung ein zwischen Fahrzeugrumpf und Frontgewicht angeordneten Aktuator, der derart angelenkt ist, dass durch Betätigen des Aktuators ein durch die Lenkeranordnung geführtes Bewegen des Frontgewichts ausgelöst wird. Dadurch wird gewährleistet, dass eine Bedienperson durch Fernsteuerung eine Verschiebung des Frontgewichts realisieren und auch bei sich ändernden Betriebsbedingungen schnell reagieren und die Ballastierung optimieren kann.

Vorzugsweise erstreckt sich der Aktuator wenigstens teilweise durch eine am Frontgewicht eingebrachte Aussparung, wobei die Aussparung mittig zur Längsachse des Fahrzeugs ausgebildet ist. Je nach Ausführungsform kann sich der Aktuator auch wenigstens teilweise durch eine Aussparung erstrecken, die am Fahrzeugrumpf und/oder an einem Fahrzeugrahmen und/oder an einer am Fahrzeugrumpf oder Fahrzeugrahmen ausgebildeten Aufnahmevorrichtung eingebracht ist, wobei diese ebenfalls entsprechend mittig ausgebildet ist. Durch die Aussparung bzw. Aussparungen wird bzw. werden eine möglichst kompakte Bauweise der Lenkeranordnung erzielt, da der Aktuator im Wesentlichen innerhalb der Aussparung seine Schwenkbewegungen ausführt. Die mittige Anordnung der Aussparung sorgt für eine möglichst symmetrische Gewichtsverteilung des Gewichts bzw. der Lenkeranordnung.

Vorzugsweise ist das Frontgewicht derart ausgebildet, dass es in seiner fahrzeugnahen Position wenigstens teilweise unterhalb des Fahrzeugrumpfs angeordnet ist. Dadurch wird zum einen eine maximale Schwerpunktverlagerung nach unten erzielt und zum anderen das Hervorstehen des Frontgewichts vor dem Fahrzeugrumpf minimiert, wodurch sich die oben genannten Vorteile in Bezug auf einen tiefen Schwerpunkt und auf eine maximale Wendigkeit noch stärker ausprägen können.

In seiner fahrzeugfernen Position ist das Frontgewicht wenigstens teilweise auf gleiche Höhe wie der Fahrzeugrumpf und vor dem Fahrzeugrumpf angeordnet. Dadurch wird eine hohe Bodenfreiheit bei Feldarbeiten gewährleistet und eine maximale Lasterhöhung an der Vorderachse erzielt.
Vorzugsweise ist der Aktuator als Hydraulikzylinder ausgebildet. Es ist jedoch auch denkbar eine andere, beispielsweise elektrische, mechanische oder pneumatische Betätigungsart zu wählen. So kann der Aktuator als Elektromotor, beispielsweise Spindelmotor, ausgebildet sein. Auch eine entsprechende Anordnung mit einem Seilzug ist denkbar, um die Betätigung rein mechanisch zu gestalten.

Vorzugsweise umfasst der Fahrzeugrumpf des Fahrzeugs einen Fahrzeugrahmen und das Frontgewicht ist unmittelbar oder mittelbar am Fahrzeugrahmen des Fahrzeugrumpfs befestigt. Eine unmittelbare Befestigung am Fahrzeugrahmen ermöglicht eine besonders einfache Befestigung an der Vorderseite des Fahrzeugs, gleichzeitig kann das Frontgewicht in der fahrzeugnahen Position so auf einfache Weise unterhalb des Fahrzeugrahmens positioniert werden. Es sind hier jedoch auch andere Befestigungs- bzw. Montagemöglichkeiten denkbar. So kann beispielsweise ein spezieller Befestigungsrahmen oder eine spezielle Aufnahmevorrichtung vorgesehen sein, an dem bzw. die die Lenkeranordnung montiert wird, wobei der Befestigungsrahmen bzw. die Aufnahmevorrichtung dann an geeigneter Stelle an der Vorderseite des Fahrzeugs bzw. des Fahrzeugrahmens befestigbar ist, beispielsweise auch seitlich des Fahrzeugrumpfs oder Fahrzeugrahmens.

In einer bevorzugten Ausgestaltung der Erfindung sind die Lenker der Lenkeranordnung über eine Arretiervorrichtung in einer voreinstellbaren Stellung arretierbar. Dadurch wird gewährleistet, dass das Frontgewicht sicher und vorzugsweise spielfrei in einer fahrzeugnahen oder auch fahrzeugfernen Position gehalten wird. Hierbei ist es möglich auch Positionen zwischen der fahrzeugnahen und der fahrzeugfernen Position arretierbar vorzusehen, so dass eine Ballastierung entsprechend feinabgestimmt durchgeführt werden kann.

Vorzugsweise umfasst die Arretiervorrichtung eine Lasche, mit der die Lenker miteinander verbindbar sind. Die Lasche wird derart zwischen die Lenker positioniert und an diese befestigt, dass eine Relativbewegung zwischen den parallel geführten Lenkern unterbunden wird. Beispielsweise können dazu verschiedene Arretierungsbohrungen entlang der Lenker ausgebildet sein, so dass die Lenker über die Lasche in mehreren Positionen miteinander verbunden werden können. Die Verbindung kann beispielsweise durch Schrauben oder Bolzen hergestellt werden. Eine Arretierung ist ferner auch dadurch möglich, dass der Aktuator in einer bestimmten Stellung gehalten bzw. blockiert wird, so dass die Lenker in einer gehaltenen bzw. blockierten Stellung verweilen. Eine derartige Blockierung kann an einem hydraulisch ausgebildeten Aktuator beispielsweise hydraulisch erfolgen. Ein elektrisch betätigbarer Spindel- oder Schrittmotor als Aktuator kann beispielsweise durch entsprechende elektronische Steuersignale in seiner Position verharren und die Lenkeranordnung elektrisch blockieren.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

### Es zeigt:

- Fig. 1: eine schematische Seitenansicht eines erfindungsgemäßen landwirtschaftlichen Fahrzeugs mit einer Lenkeranordnung für ein bewegbares Frontgewicht in fahrzeugnaher Position,
- Fig. 2: eine schematische Seitenansicht des landwirtschaftlichen Fahrzeugs aus Figur 1 mit der Lenkeranordnung für ein bewegbares Frontgewicht in fahrzeugferner Position,
- Fig. 3: eine vergrößerte schematische Seitenansicht der Lenkeranordnung aus Figur 1,
- Fig. 4: eine vergrößerte schematische Seitenansicht der Lenkeranordnung aus Figur 2 und
- Fig. 5: eine schematische Draufsicht des vorderen Teils des landwirtschaftlichen Fahrzeugs gemäß Figur 2.

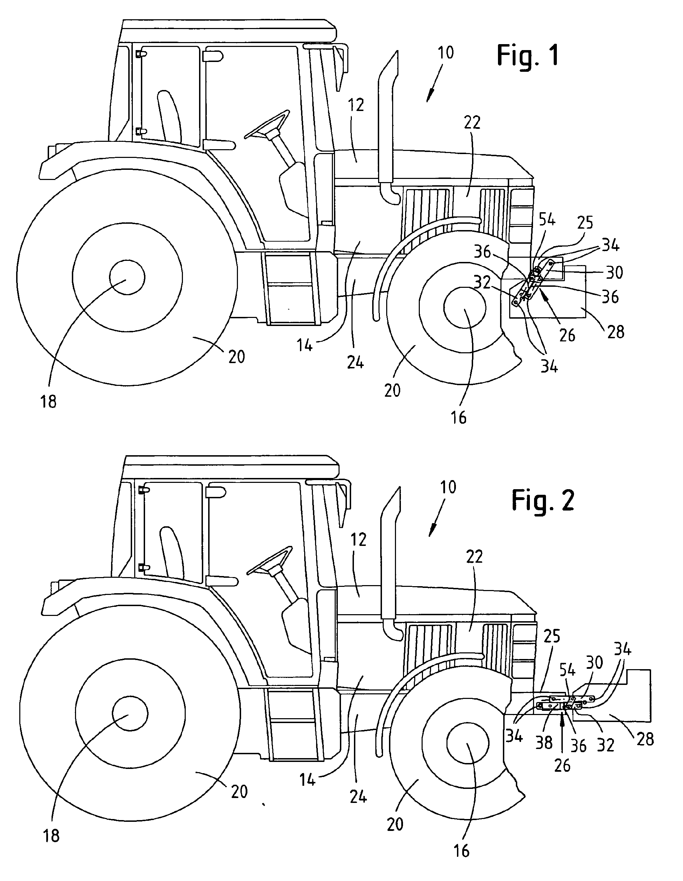

In den Figuren 1 und 2 ist ein erfindungsgemäßes landwirtschaftliches Fahrzeug 10 in Form eines Schleppers 12 dargestellt. Der Schlepper 12 weist einen Fahrzeugrumpf 14 auf, der von an einer Vorderachse 16 und einer Hinterachse 18 aufgehängten Rädern 20 getragen wird. Der Fahrzeugrumpf 14 umfasst eine Fahrzeugkarosserie 22 sowie einen die Fahrzeugkarosserie 22 tragenden Fahrzeugrahmen 24, wobei der Fahrzeugrahmen 24 an der Vorderseite mit der Fahrzeugkarosserie 22 an seiner Vorderseite abschließt. An den Fahrzeugrahmen 24 ist an der Vorderseite des Fahrzeugs 10 eine Aufnahmevorrichtung 25 für eine Lenkeranordnung 26 angeordnet bzw. an den Fahrzeugrahmen 24 befestigt, die sich über die Fahrzeugkarosserie 22 hinaus nach vorn erstreckt. Anstelle an die Aufnahmevorrichtung 25 kann die Lenkeranordnung 26 auch direkt, also unmittelbar, oder über andere geeignete Verbindungsmittel, also mittelbar, an den Fahrzeugrahmen 24 gekoppelt bzw. mit diesem verbunden werden.

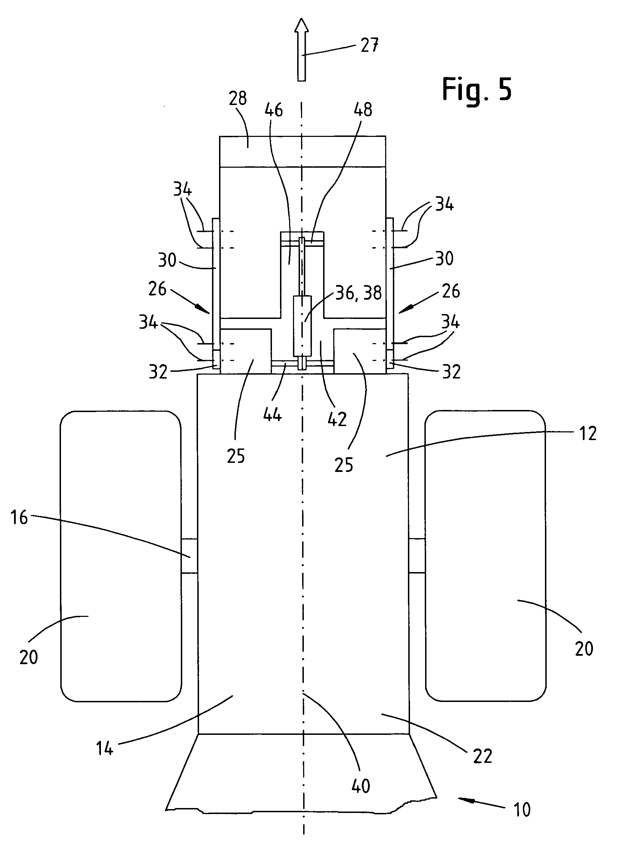

An dem Fahrzeugrahmen 24 bzw. an der Aufnahmevorrichtung 25 ist über die Lenkeranordnung 26 in Fahrzeuglängsrichtung 27 (siehe Figur 5) vor dem Fahrzeug 10 ein Frontgewicht 28 zur Ballastierung des Fahrzeugs 10 beweglich aufgehängt.

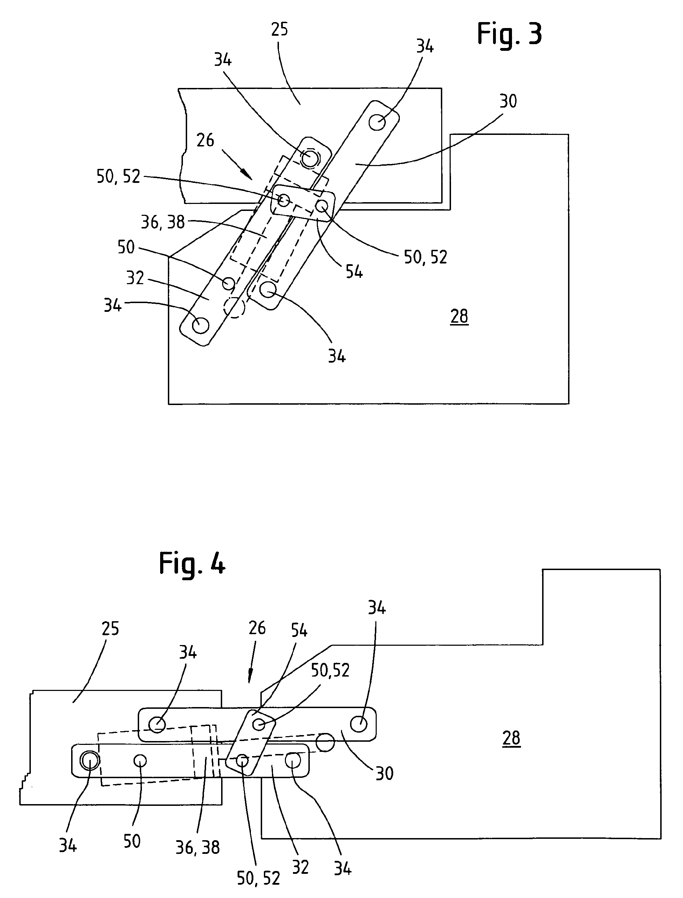

Die Lenkeranordnung 26 ist im Detail in den Figuren 3 bis 5 dargestellt. Die Lenkeranordnung 26 weist beidseitig des Fahrzeugrahmens 24 bzw. der Aufnahmevorrichtung 25 und des Frontgewichts 28 jeweils einen oberen und einen unteren Lenker 30, 32 auf, die parallel zueinander ausgerichtet, jedoch in Fahrzeuglängsrichtung 27 versetzt zueinander angeordnet sind. Die Lenker 30, 32 sind jeweils schwenkbar über Lagerbolzen 34 einen Ends seitlich am Fahrzeugrahmen 24 bzw. an der Aufnahmevorrichtung 25 mit dem Fahrzeugrahmen 24 bzw. der Aufnahmevorrichtung 25 und anderen Ends seitlich am Frontgewicht 28 mit dem Frontgewicht 28 verbunden, wobei jeweils die oberen Lenker 30 gegenüber den jeweiligen unteren Lenkern 32 in Fahrzeuglängsrichtung 27 nach vorn versetzt angelenkt sind. Die Lenker 30, 32 weisen eine gleiche Länge auf und bilden somit ein Parallelogrammgestänge, welches in Fahrzeuglängsrichtung 27 verschwenkbar ist, wobei in den Figuren 1 und 3 eine fahrzeugnahe Position und in den Figuren 2, 4 und 5 jeweils eine fahrzeugferne Position abgebildet ist und wobei die Lenker 30, 32 des Parallelogrammgestänges in der fahrzeugfernen Position eine im Wesentlichen horizontale Ausrichtung einnehmen und in der fahrzeugnahen Position eine nach unten gerichtet vertikale Ausrichtung einnehmen bzw. überschreiten, so dass die Lenker gegebenenfalls eine nach hinten (entgegen der Fahrzeuglängsrichtung 27) gerichtete Stellung einnehmen.

Wie in den Figuren 1, 2, 3 und 4 gestrichelt angedeutet und in Figur 5 dargestellt ist, erstreckt sich zwischen dem Frontgewicht 28 und dem Fahrzeugrahmen 24 bzw. der Aufnahmevorrichtung 25 ein Aktuator 36 in Form eines Hydraulikzylinders 38. Der Hydraulikzylinder 38 ist fahrzeugrahmenseitig in einer am vorderen Teil des Fahrzeugrahmens 24 bzw. in der Aufnahmevorrichtung 25, symmetrisch zu einer Fahrzeuglängsmittenachse 40, ausgebildeten Aussparung 42 über einen Schwenkbolzen 44 schwenkbar angelenkt. Ferner ist das Frontgewicht 28 mit einer Aussparung 46 versehen, die sich ebenfalls symmetrisch zu einer Fahrzeuglängsmittenachse 40 (also mittig) bis ins Innere des Frontgewichts 28 erstreckt. In der Aussparung 46 ist ein weiterer Schwenkbolzen 48 vorgesehen, mit dem der Hydraulikzylinder 38 am Frontgewicht 28 schwenkbar angelenkt ist.

Die Aussparungen 42, 46 sind so ausgebildet, dass der Hydraulikzylinder 38 bzw. der Aktuator 36 sich innerhalb der Aussparungen 42, 46 frei bewegen kann und bei einem Ausfahren des Aktuators 36 durch diesen ein Stellmoment auf die Lenkeranordnung 26 ausgeübt wird, welches einem Stellmoment, das durch die Gewichtskraft des Frontgewicht 28 in fahrzeugferner Position auf die Lenkeranordnung 26 ausgeübt wird, entgegen wirkt, so dass das Frontgewicht 28 bei einem Ausfahren des Aktuators 36 aus einer fahrzeugnahen unteren Position, in eine fahrzeugferne, obere Position bewegt wird.

Das Frontgewicht 28 und die Lenkeranordnung 26 sind derart ausgebildet bzw. an die Ausgestaltung des Fahrzeugs 10 angepasst, dass das Frontgewicht 28 in fahrzeugnaher Position bis unterhalb des Fahrzeugrumpfes 14 oder Fahrzeugrahmens 24 bewegt bzw. positioniert wird und nur zu einem geringen Teil über die Abmessungen des Fahrzeugrahmens 24 hinausragt bzw. möglichst nah an die Vorderachse 16 des Fahrzeugs 10 bewegt wird. Bei entsprechender Ausgestaltung der Lenkeranordnung 26 und des Frontgewichts 28 ist auch eine fahrzeugnahe Position erzielbar, in der das Frontgewicht 28 nicht über die Abmessungen des Fahrzeugrahmens 24 hinausragt. Dies ist durch entsprechende Anpassung der Lenker- und insbesondere der Frontgewichtsgeometrie leicht erzielbar und soll hiermit berücksichtigt sein. In der fahrzeugfernen, oberen Position ist das Frontgewicht 28 in einer Position, die einen wesentlich höheren Schwerpunkt aufweist als die fahrzeugnahe untere Position.

An den oberen und unteren Lenkern sind Arretierungsbohrungen 50 vorgesehen, an denen mittels Arretierungsbolzen 52 eine Arretierungslasche 54 befestigt ist, die die Lenkeranordnung 26 wahlweise in ihrer unteren, fahrzeugnahen oder in ihrer oberen, fahrzeugfernen Position arretiert. Durch weitere entsprechend angeordneten Arretierungsbohrungen 50 an Lenker 30, 32 und/oder Arretierungslasche 54 können auch weitere Arretierungspositionen angeordnet werden. Ferner kann der Aktuator als blockierbarer bzw. selbsthemmender Aktuator ausgebildet sein, so dass keine separate Arretiereinrichtung vorgesehen sein muss. Beispielsweise kann ein Spindelmotor (nicht gezeigt) als Aktuator vorgesehen sein, der ein entsprechend selbsthemmendes Gewinde aufweist. Eine weitere Möglichkeit ist eine entsprechende hydraulische Ansteuerung für den Hydraulikzylinder 38, derart, dass ein Hydraulikausfluss aus einer oder mehreren Kammern des Hydraulikzylinders 38 durch ein oder mehrere Sperrventile blockiert wird.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten.

## Patentansprüche

1. Landwirtschaftliches Fahrzeug (10), insbesondere Schlepper (12), mit einem Fahrzeugrumpf (14) und einem über eine Lenkeranordnung (26) am vorderen Teil des Fahrzeugrumpfs (14) befestigten Frontgewicht (28), wobei das Frontgewicht (28) über die Lenkeranordnung (26) aus einer fahrzeugnahen Position in eine fahrzeugferne Position bewegbar ist, **dadurch gekennzeichnet, dass** die Lenkeranordnung (26) seitlich des Frontgewichts (28) jeweils wenigstens zwei angeordnete Lenker (30, 32) aufweist, die einenends am Fahrzeugrumpf (14) und anderenends an den Seiten des Frontgewichts (28) derart angeordnet sind, dass das Frontgewicht (28) in der fahrzeugnahen Position eine tiefere Schwerpunktlage einnimmt als in der fahrzeugfernen Position.

2. Landwirtschaftliches Fahrzeug (10) nach Anspruch 1, **dadurch gekennzeichnet, dass** die Lenker (30, 32) parallel zueinander geführt und versetzt zueinander angeordnet sind.

3. Landwirtschaftliches Fahrzeug (10) nach Anspruch 1 oder 2, **dadurch gekennzeichnet, dass** die Lenkeranordnung (26) parallel zu einer in Fahrzeuglängsrichtung (27) vertikal ausgerichteten Ebene schwenkbar ist.

4. Landwirtschaftliches Fahrzeug (10) nach einem der Ansprüche 1 bis 3, **dadurch gekennzeichnet, dass** die Lenkeranordnung (26) ein zwischen Fahrzeugrumpf (14) und Frontgewicht (28) angeordneten Aktuator (36, 38) umfasst, der derart angelenkt ist, dass durch Betätigen des Aktuators (36, 38) ein durch die Lenkeranordnung (26) geführtes Bewegen des Frontgewichts (28) ausgelöst wird.

5. Landwirtschaftliches Fahrzeug (10) nach Anspruch 4, **dadurch gekennzeichnet, dass** der Aktuator (36, 38) sich wenigstens teilweise durch eine am Frontgewicht (28) eingebrachte Aussparung (46) erstreckt, wobei die Aussparung (46) mittig zur Längsachse (40) des Fahrzeugs (10) ausgebildet ist.

6. Landwirtschaftliches Fahrzeug (10) nach Anspruch 4 oder 5, **dadurch gekennzeichnet, dass** der Aktuator (36, 38) sich wenigstens teilweise durch eine am Fahrzeugrumpf (14) und/oder an einem Fahrzeugrahmen (24) und/oder an einer Aufnahmevorrichtung (25) eingebrachte Aussparung (42) erstreckt, wobei die Aussparung (42) mittig zur Längsachse (40) des Fahrzeugs (10) ausgebildet ist.

7. Landwirtschaftliches Fahrzeug (10) nach einem der Ansprüche 1 bis 6, **dadurch gekennzeichnet, dass** das Frontgewicht (28) in seiner fahrzeugnahen Position wenigstens teilweise unterhalb des Fahrzeugrumpfs (14) angeordnet ist.

8. Landwirtschaftliches Fahrzeug (10) nach einem der Ansprüche 1 bis 7, **dadurch gekennzeichnet, dass** das Frontgewicht (28) in seiner fahrzeugfernen Position wenigstens teilweise auf gleiche Höhe wie der Fahrzeugrumpf (14) und vor dem Fahrzeugrumpf (14) angeordnet ist.

9. Landwirtschaftliches Fahrzeug (10) nach einem der Ansprüche 2 bis 8, **dadurch gekennzeichnet, dass** der Aktuator (36) als Hydraulikzylinder (38) ausgebildet ist.

10. Landwirtschaftliches Fahrzeug (10) nach einem der Ansprüche 1 bis 9, **dadurch gekennzeichnet, dass** der Fahrzeugrumpf (14) einen Fahrzeugrahmen (24) umfasst und die Lenkeranordnung (26) mittelbar oder unmittelbar am Fahrzeugrahmen (24) oder an der Aufnahmevorrichtung (25) befestigt ist.

11. Landwirtschaftliches Fahrzeug (10) nach einem der Ansprüche 1 bis 10, **dadurch gekennzeichnet, dass** die Lenker (30, 32) über eine Arretiervorrichtung in einer voreinstellbaren Stellung arretierbar sind.

12. Landwirtschaftliches Fahrzeug (10) nach Anspruch 11, **dadurch gekennzeichnet, dass** die Arretiervorrichtung eine Arretierungslasche (54) umfasst, mit der die Lenker (30, 32) miteinander verbindbar sind.

## Claims

1. Agricultural vehicle (10), in particular tractor (12), with a vehicle body (14) and a front weight (28) which is fastened to the front part of the vehicle body (14) via a link arrangement (26), wherein the front weight (28) is movable from a position close to the vehicle into a position remote from the vehicle via the link arrangement (26), **characterized in that** the link arrangement (26) at the sides of the front weight (28) has in each case at least two links (30, 32) which are arranged at one end on the vehicle body (14) and at the other end on the sides of the front weight (28) in such a manner that the front weight (28) takes up a lower centre of gravity position in the position close to the vehicle than in the position remote from the vehicle.

2. Agricultural vehicle (10) according to Claim 1, **characterized in that** the links (30, 32) are guided parallel to each other and are offset with respect to each other.

3. Agricultural vehicle (10) according to Claim 1 or 2, **characterized in that** the link arrangement (26) can be pivoted parallel to a plane oriented vertically in the longitudinal direction (27) of the vehicle.

4. Agricultural vehicle (10) according to one of Claims 1 to 3, **characterized in that** the link arrangement (26) comprises an actuator (36, 38) which is arranged between the vehicle body (14) and the front weight (28) and is coupled in such a manner that actuation of the actuator (36, 38) triggers a movement of the front weight (28) in a manner guided by the link arrangement (26).

5. Agricultural vehicle (10) according to Claim 4, **characterized in that** the actuator (36, 38) extends at least partially through a recess (46) provided on the front weight (28), the recess (46) being formed centrally with respect to the longitudinal axis (40) of the vehicle (10).

6. Agricultural vehicle (10) according to Claim 4 or 5, **characterized in that** the actuator (36, 38) extends at least partially through a recess (42) provided on the vehicle body (14) and/or on a vehicle frame (24) and/or on a receiving device (25), the recess (42) being formed centrally with respect to the longitudinal axis (40) of the vehicle (10).

7. Agricultural vehicle (10) according to one of Claims 1 to 6, **characterized in that** the front weight (28), in the position thereof close to the vehicle, is arranged at least partially below the vehicle body (14).

8. Agricultural vehicle (10) according to one of Claims 1 to 7, **characterized in that** the front weight (28), in the position thereof remote from the vehicle, is arranged at least partially level with the vehicle body (14) and in front of the vehicle body (14).

9. Agricultural vehicle (10) according to one of Claims 2 to 8, **characterized in that** the actuator (36) is designed as a hydraulic cylinder (38).

10. Agricultural vehicle (10) according to one of Claims 1 to 9, **characterized in that** the vehicle body (14) comprises a vehicle frame (24) and the link arrangement (26) is fastened indirectly or directly to the vehicle frame (24) or to the receiving device (25).

11. Agricultural vehicle (10) according to one of Claims 1 to 10, **characterized in that** the links (30, 32) can be locked in a presettable position via a locking device.

12. Agricultural vehicle (10) according to Claim 11, **characterized in that** the locking device comprises a locking clip (54) with which the links (30, 32) can be connected to each other.

## Revendications

1. Véhicule agricole (10), en particulier tracteur (12) comprenant un corps de véhicule (14) et un poids avant (28) fixé par le biais d'un agencement de bras (26) à la partie avant du corps de véhicule (14), le poids avant (28) pouvant être déplacé par le biais de l'agencement de bras (26) d'une position proche du véhicule dans une position éloignée du véhicule, **caractérisé en ce que** l'agencement de bras (26) présente à chaque fois au moins deux bras disposés (30, 32) latéralement par rapport au poids avant (28) qui sont disposés à une extrémité au niveau du corps de véhicule (14) et à l'autre extrémité sur les côtés du poids avant (28) de telle sorte que le poids avant (28) adopte dans la position proche du véhicule un centre de gravité plus bas que dans la position éloignée du véhicule.

2. Véhicule agricole (10) selon la revendication 1, **caractérisé en ce que** les bras (30, 32) sont guidés parallèlement l'un à l'autre et sont disposés de manière décalée l'un par rapport à l'autre.

3. Véhicule agricole (10) selon la revendication 1 ou 2, **caractérisé en ce que** l'agencement de bras (26) peut être pivoté parallèlement à un plan orienté verticalement dans la direction longitudinale du véhicule (27).

4. Véhicule agricole (10) selon l'une quelconque des revendications 1 à 3, **caractérisé en ce que** l'agencement de bras (26) comprend un actionneur (36, 38) disposé entre le corps de véhicule (14) et le poids avant (28), qui est articulé de telle sorte qu'un déplacement du poids avant (28) guidé par l'agencement de bras (26) soit déclenché par l'actionnement de l'actionneur (36, 38).

5. Véhicule agricole (10) selon la revendication 4, **caractérisé en ce que** l'actionneur (36, 38) s'étend au moins en partie à travers un évidement (46) pratiqué au niveau du poids avant (28), l'évidement (46) étant réalisé centralement par rapport à l'axe longitudinal (40) du véhicule (10).

6. Véhicule agricole (10) selon la revendication 4 ou 5, **caractérisé en ce que** l'actionneur (36, 38) s'étend au moins en partie à travers un évidement (42) pratiqué sur le corps de véhicule (14) et/ou sur un châssis de véhicule (24) et/ou sur un dispositif de réception (25), l'évidement (42) étant réalisé centralement par rapport à l'axe longitudinal (40) du véhicule (10).

7. Véhicule agricole (10) selon l'une quelconque des revendications 1 à 6, **caractérisé en ce que** le poids avant (28) est disposé au moins en partie en dessous du corps de véhicule (14) dans sa position proche du véhicule.

8. Véhicule agricole (10) selon l'une quelconque des revendications 1 à 7, **caractérisé en ce que** le poids avant (28) est disposé dans sa position éloignée du véhicule, au moins en partie à la même hauteur que le corps de véhicule (14) et devant le corps de véhicule (14).

9. Véhicule agricole (10) selon l'une quelconque des revendications 2 à 8, **caractérisé en ce que** l'actionneur (36) est réalisé sous forme de vérin hydraulique (38).

10. Véhicule agricole (10) selon l'une quelconque des revendications 1 à 9, **caractérisé en ce que** le corps de véhicule (14) comprend un châssis de véhicule (24) et l'agencement de bras (26) est fixé de manière directe ou indirecte sur le châssis de véhicule (24) ou sur le dispositif de réception (25).

11. Véhicule agricole (10) selon l'une quelconque des revendications 1 à 10, **caractérisé en ce que** les bras (30, 32) peuvent être bloqués par le biais d'un dispositif de blocage dans une position préajustable.

12. Véhicule agricole (10) selon la revendication 11, **caractérisé en ce que** le dispositif de blocage comprend une patte de blocage (54) avec laquelle les bras (30, 32) peuvent être connectés l'un à l'autre.
